Europäisches Patentamt

(19) European Patent Office

Office européen des brevets

(11) Veröffentlichungsnummer: **0 083 707**
**B1**

## (12) EUROPÄISCHE PATENTSCHRIFT

(45) Veröffentlichungstag der Patentschrift:
27.03.85

(21) Anmeldenummer: 82110489.0

(22) Anmeldetag: 13.11.82

(51) Int. Cl.⁴: **B 23 K 20/10**, H 01 R 43/02

(54) **Vorrichtung zum Verbinden zweier elektrischer Leiter.**

(30) Priorität: 23.12.81 DE 3151151

(43) Veröffentlichungstag der Anmeldung:
20.07.83 Patentblatt 83/29

(45) Bekanntmachung des Hinweises auf die Patenterteilung:
27.03.85 Patentblatt 85/13

(84) Benannte Vertragsstaaten:
AT BE CH FR GB IT LI LU NL SE

(56) Entgegenhaltungen:
EP - A - 0 027 826
DE - A - 1 490 632
DE - B - 1 220 235
DE - C - 2 007 266

(73) Patentinhaber: SCHUNK Ultraschalltechnik GmbH,
Feldchenstrasse 65, D-8750 Aschaffenburg (DE)

(72) Erfinder: Niebuhr, Friedrich W., Bogevenget 14,
DK-4780 Stege/Mon. (DK)

(74) Vertreter: Stoffregen, Hans-Herbert, Dr. Dipl.-Phys. et al,
Patentanwälte Strasse & Stoffregen Salzstrasse 11a,
D-6450 Hanau/Main (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Verbinden elektrischer Leiter vorzugsweise in Form von Litzen umfassend eine Schall- bzw. Ultraschallschwingungen erzeugende Sonotrode sowie zumindest eine als Amboß dienende Gegenelektrode.

Um elektrische Leiter zu verbinden wird die Knotenstelle normalerweise mit einer Hülse überdeckt, um diese dann mit den Leitern zu vercrimpen und gegebenenfalls anschließend zu verschweißen. Dies kann zum Beispiel mittels Löten, Widerstandsschweißen oder Ultraschallschweißen erfolgen. Der Nachteil dieser Verfahren besteht grundsätzlich darin, daß die Montage zeitaufwendig ist, da die Leiterenden in die Hülse zunächst eingebracht werden müssen, um anschließend eine feste Verbindung herzustellen.

Eine Vorrichtung zum Verbinden von elektrischen Leitern in Form von Litzen mit einem metallischen Träger ist der DE-AS 2 641 508 zu entnehmen, bei der der elektrische Leiter in eine als Amboß ausgebildete Gegenelektrode einer Ultraschallschweißvorrichtung eingelegt wird. Sodann wird auf den Amboß der mit dem Leiter zu verbindende elektrische Träger aufgelegt, um anschließend die Sonotrode in Richtung des Amboß zu bewegen. Um den Träger mit unterschiedlichen Leiterdurchmessern verbinden zu können, weist der Amboß federbeaufschlagte bewegliche Schieber auf, auf die die Sonotrode abgesenkt werden kann. Dabei ist der Abstand zwischen den Schiebern stets kleiner als die entsprechende Erstreckung der anliegenden Sonotrodenflächen.

Aufgabe der vorliegenden Erfindung ist es, eine Vorrichtung der eingangs genannten Art derart auszubilden, daß ein problemloses, kostengünstiges und rationelles Verbinden elektrischer Leiter vorzugsweise in Form von Litzen ermöglicht wird, ohne daß die zu verbindenden Leiter mit einer Hülse umgeben werden müssen, wobei des weiteren eine leichte Anpassung an unterschiedliche Leiterstärken möglich sein soll.

Die Aufgabe wird erfindungsgemäß dadurch gelöst, daß die Sonotrode an der Umfangsfläche zumindest eine zu verbindenden Leitern angepaßte Ausnehmung aufweist, die von einer Sonotrodenrandfläche ausgeht, entlang der eine einen der Ausnehmung angepaßten Vorsprung aufweisende Fläche des Amboßes derart verschiebbar ist, und daß in der die Leiter verbindenden Stellung von Sonotrode und Amboß die Ausnehmung und der zugeordnete Vorsprung einen parallel oder nahezu parallel zur Sonotrodenschwingungsachse verlaufenden an seinen Stirnseiten zum Durchführen der Leiter geöffneten einen Verdichtungsraum darstellenden Hohlraum bilden. Dabei sind selbstverständlich Vorsprung und Ausnehmung derart aufeinander abgestimmt, daß eine Wechselwirkung mit dem Sonotrodenkopf erfolgt, wodurch letztendlich die Verschweißung erfolgt.

Durch die erfindungsgemäße Lehre brauchen demzufolge die zu verbindenden Leiter nur noch in dem Verdichtungsraum eingebracht zu werden, um sie anschließend verbinden zu können. Vorzugsweise werden dabei die zu verbindenden Leiter bei angehobenem Amboß, ohne daß jedoch seine zu der Randfläche korrespondierende Fläche von dieser entfernt wird, in die Ausnehmung der Sonotrode eingelegt, um dann den Amboß abzusenken bis der Vorsprung mit der Ausnehmung derart in Wechselwirkung tritt, daß sich der Verdichtungsraum bzw. Hohlraum bildet, um anschließend die Sonotrode in Schwingung versetzen zu können.

Da — wie gesagt — auch der angehobene Amboß mit der den Vorsprung aufweisenden Fläche an der die Ausnehmung zeigenden Randfläche anliegt, wird das Einbringen der Leiterenden in die Ausnehmungen erleichtert, da der Amboß quasi eine Führungshilfe darstellt.

In einer besonders hervorzuhebenden Ausgestaltung der Erfindung umfaßt die Sonotrode bzw. der Sonotrodenkopf ein Vieleck bildende eben verlaufende die Umfangsfläche darstellende Randflächen, in deren Schnittpunkten Ausnehmungen vorzugsweise unterschiedlicher Abmessungen angeordnet sind. Demzufolge befindet sich auf der Peripherie der Sonotrode bzw. des Sonotrodenkopfes eine Vielzahl von Ausnehmungen, die mit entsprechenden Vorsprüngen in Wechselwirkung treten, um Verdichtungsräume unterschiedlicher Abmessungen für Leiter unterschiedlicher Stärken zur Verfügung zu stellen.

Als eigenerfinderische Ausgestaltung der Erfindung ist die Lehre zu bezeichnen, daß jeweils zwei Randflächen der Sonotrode bzw. des Sonotrodenkopfes parallel zueinander verlaufen, entlang derer jeweils ein Amboß mit Vorsprüngen vorzugsweise synchron zueinander bewegbar ist, die denen der zugeordneten Ausnehmungen angepaßt sind. Durch den erfindungsgemäßen Vorschlag wird die Möglichkeit eröffnet, an gegenüberliegenden Sonotrodenausnehmungen die an zugeordneten Ambossen angrenzen, jeweils getrennt Leiter einzubringen, um bei einem Arbeitsgang gleich zwei Knotenpunkte auszubilden. Daß eine entsprechende Vorrichtung zur Automatisierung beim Verbinden der Leiter Verwendung finden kann, versteht sich eo ipso.

Vorzugsweise weist jeder Amboß mehrere unterschiedliche Vorsprünge aufweisende entlang von Sonotrodenrandflächen verschiebbare Flächen auf. Dadurch wird die bereits aufgezeigte Möglichkeit eröffnet, daß aufgrund der unterschiedlichen Vorsprünge auch unterschiedliche Leiterstärken miteinander verschweißt werden können, ohne daß in Abhängigkeit von der Leiterstärke unterschiedliche Ambosse Verwendung finden müssen. Um den gewünschten Vorsprung einer bestimmten Ausnehmung zuordnen zu können, ist nach einer Ausführungsform der Amboß um seine Hauptachse drehbar ausgebildet, die parallel zur Verschiebungsrichtung verläuft. Ebenso ist die Sonotrode entlang ihrer Hauptachse drehbar gelagert, so daß die Bezeichnung »Revolversonotrode« zutreffend sein dürfte.

Die an die Abmessungen der zu verbindenden Leiter angepaßten Ausnehmungen werden vorzugsweise durch zwei in Sonotrodenlängsachsrichtung verlaufende Schenkel begrenzt, von denen der zur zugeordneten Randfläche versetzt angeordnete parallel zu dieser verläuft und der von der Randfläche ausgehende zu dieser einen Winkel von 90° oder weniger beschreibt, wobei der Übergang zwischen den Schenkeln vorzugsweise rund wie zum Beispiel konkav ist. Insbesondere wenn der Winkel zwischen den Schenkeln kleiner als 90° ist, wird sichergestellt, daß die eingelegten Leiterenden nicht herausrutschen können. Durch den runden Übergang zwischen den Schenkeln wird sichergestellt, daß das verschweißte Endprodukt keine scharfen Kanten aufweist.

Damit der Knotenpunkt von den verschweißten Leitern eine besonders hohe Festigkeit aufweist, ist in einer weiteren besonders erwähnenswerten Ausgestaltung der Erfindung der parallel zur zugeordneten Randfläche verlaufende Abschnitt (Schenkel) der Ausnehmung parallel zur Verschiebungsrichtung des entlang der Randfläche zu bewegenden Ambosses durch abwechselnd angeordnete Erhebungen und Vertiefungen strukturiert, um sogenannte Riefen zu bilden, die zum Beispiel durch Funkenerosion eingeschnitten werden können.

Die am Amboß angeordneten Vorsprünge werden dagegen vorzugsweise durch jeweils eine Stufe gebildet, deren einer (erster) Abschnitt der entlang einer Randfläche der Sonotrode verschiebbaren Fläche entspricht bzw. von dieser ausgeht, und der andere (zweite) Abschnitt einen Winkel von vorzugsweise 90° dazu beschreibt, wobei die seitliche Erstreckung des zweiten Abschnitts von dem ersten Abschnitt gleich oder kleiner als die Tiefe der zuzuordnenden Ausnehmungen der Sonotrode ist. Ferner sollte die entlang der Randfläche der Sonotrode verschiebbare Fläche des Ambosses aus gehärtetem Material bestehen, um einem vorzeitigen Verschleiß vorzubeugen.

Schließlich kann die Bewegungsrichtung des bzw. der Ambosse zu der Schwingungsrichtung der Sonotrode einen Winkel von 90° ± 20° beschreiben, wobei dieser unter anderem von den zu verschweißenden Leitermaterialien abhängig ist.

Weitere Vorteile der Erfindung ergeben sich aus den in der Zeichnung dargestellten bevorzugten Ausführungsbeispielen. Es zeigt

Fig. 1 eine Seitenansicht einer erfindungsgemäß ausgebildeten Sonotrode,

Fig. 2 eine Vorderansicht einer ersten Ausführungsform einer erfindungsgemäßen Vorrichtung,

Fig. 3 eine Vorderansicht einer zweiten Ausführungsform,

Fig. 4 eine Draufsicht der Ausführungsform nach Fig. 3,

Fig. 5 eine Vorderansicht einer weiteren Ausführungsform und

Fig. 6 eine Draufsicht der Ausführungsform nach Fig. 5.

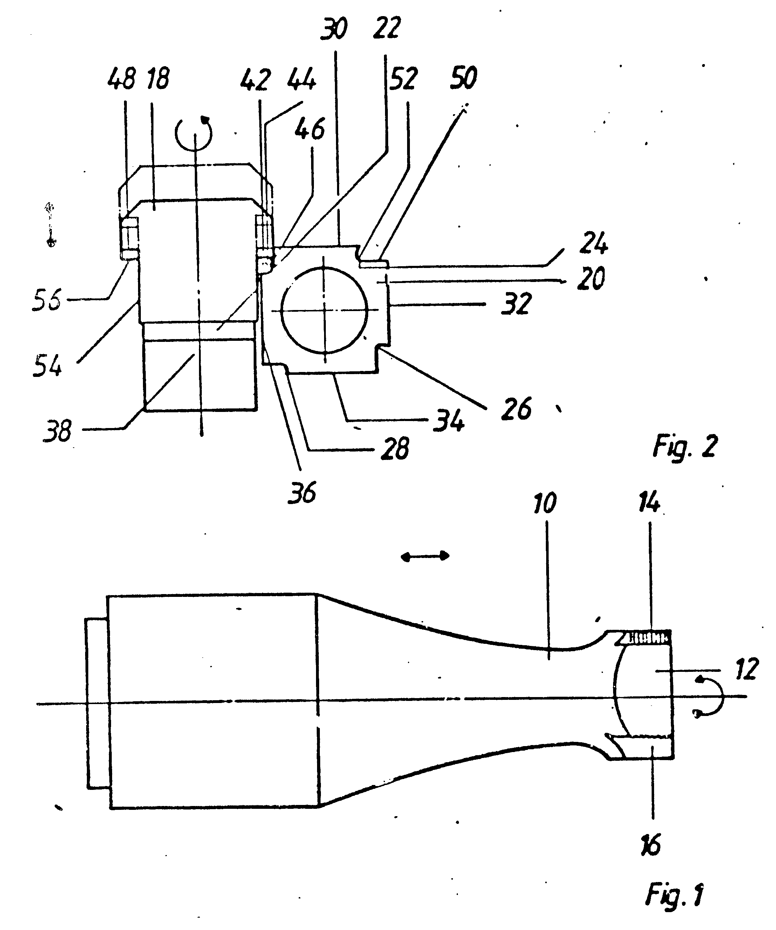

In Fig. 1 ist in Seitenansicht eine Sonotrode 10 dargestellt, die einen Sonotrodenkopf 12 umfaßt, der an seiner Umfangsfläche Ausnehmungen 14 und 16 aufweist, deren Ausbildung und Funktion im Zusammenhang mit den Fig. 2 bis 6 näher beschrieben werden.

Die Sonotrode 10 wird in Längsrichtung in Schwingungen zur Erzeugung von Schall- bzw. Ultraschallschwingungen versetzt, um in die Ausnehmungen 14 und 16 eingebrachte elektrische Leiter miteinander zu verbinden. Zu diesem Zweck muß der Sonotrode 10 eine Gegenelektrode zugeordnet werden, die auch als Amboß bezeichnet wird. Zwischen Amboß und Sonotrode 10 werden dann die elektrischen Leiter eingelegt, um verschweißte Knotenpunkte zu bilden.

In Fig. 2 ist eine Ausführungsform dargestellt, wie eine Sonotrode 20 mit einem Amboß 18 zueinander positioniert werden, um die gewünschte Verschweißung durchführen zu können. So weist die Sonotrode 20 bzw. der entsprechende Sonotrodenkopf an seiner Umfangsfläche vier Ausnehmungen 22, 24, 26 bzw. 28 auf, die in den Schnittpunkten von die Umfangsfläche bildenden eben verlaufenden Randflächen 30, 32, 34 bzw. 36 liegen. Mit anderen Worten wird der Querschnitt des Sonotrodenkopfes 20 von einem Quadrat gebildet, dessen Ecken durch die Ausnehmungen 22, 24, 26 und 18 ersetzt worden sind. Der Amboß 18 ist nun so ausgebildet, daß er eine ebene Fläche 38 aufweist, die entlang der Randfläche 36 verschiebbar ist. Ferner ist der Ausnehmung 22 ein Vorsprung 42 zugeordnet, so daß sich bei eingebrachten Leitern, die in der Darstellung durch Litzen 44 angedeutet sind, der Vorsprung 42 und die zugeordnete Ausnehmung 22 zu einem Verdichtungsraum 46 ergänzen.

Damit nun Leiter verschweißt werden können, ergibt sich folgender Arbeitsablauf.

Zunächst befindet sich der Amboß 18 in einer angehobenen Stellung (gestrichelt dargestellt), damit die Leiter in die Ausnehmung 22 eingebracht werden, wobei die entlang der Randfläche 36 der Sonotrode 20 verschiebbare Fläche 38 des Ambosses 18 gleichzeitig als Führungsfläche dient. Sobald die Leiter in die Ausnehmung 22 eingebracht worden sind, wird der Amboß in Richtung auf die Sonotrode soweit herabgesenkt (Darstellung in durchgezogenen Linien), daß der zwischen Vorsprung 42 und Ausnehmung 22 verbleibende Bereich den erforderlichen Verdichtungsraum 46 bildet. Sodann wird die Sonotrode 10 für eine Zeitdauer, die im Zehntelsekundenbereich liegen kann, in Schwingungen versetzt, um die Leiter zu verschweißen, um also den Knotenpunkt herzustellen. Sodann wird der Amboß 18 wieder angehoben, um die verschweißten Leiter entfernen zu können.

Um auch Leiter unterschiedlicher Stärken mit ein und derselben Sonotrode und einem einzigen Amboß fest verschweißen zu können, sind die Ausnehmungen 22 bis 28 in ihrer Tiefe bzw. Höhe unterschiedlich ausgebildet. Gleichzeitig weist der Amboß neben dem Vorsprung 42 im Ausführungsbeispiel der Fig. 2 einen weiteren Vorsprung 48 auf, die sich hinsichtlich ihrer nach außen gerichteten Erstreckung oder hinsichtlich der in bezug auf die Schweißposition des Ambosses 18 bezogene Höhe voneinander unterscheiden können. Zu diesem Zweck sind der Amboß 18 und die Sonotrode jeweils um ihre Längsachse drehbar gelagert (durch Pfeile angedeutet).

Ist im Ausführungsbeispiel der Fig. 2 der Amboß im Schnitt T-förmig, in Draufsicht rechteckig ausgebildet, so können selbstverständlich den Ausnehmungen 22, 24, 26, 28 vier verschiedene Vorsprünge zugeordnet sein, so daß der entsprechende Amboß in Draufsicht eine Kreuzform aufweist.

Zu den Ausnehmungen ist zu bemerken, daß diese durch zwei in Sonotrodenlängsrichtung verlaufende Schenkel 50 und 52 begrenzt sind (beispielhaft dargestellt an der Ausnehmung 24), von denen zur zugeordneten Randfläche 30, entlang der der Amboß verschoben wird, versetzt angeordnete Schenkel parallel zu der Randfläche 30 verläuft, wohingegen der von dieser ausgehende Schenkel 52 rechtwinklig oder spitzwinklig in Richtung der Sonotrodenmitte hin verläuft. Ferner ist der Übergang zwischen den Schenkeln 50 und 52 konkav ausgebildet, um ein einfaches Einlegen der zu verbindenden Leiter zu ermöglichen. Mit anderen Worten stellt die Ausnehmung 24 im Schnitt vorzugsweise eine J-Form dar. Ferner ist der zeichnerischen Darstellung von Fig. 2 zu entnehmen, daß bei nur einem der Sonotrode zugeordneten Amboß die Ausnehmungen umlaufend gleichsinnig ausgebildet sind.

Jeder Vorsprung 42 bzw. 48 des Amboß 18 wird durch eine Stufe gebildet, deren einer Abschnitt 54 der entlang einer Randfläche der Sonotrode 20 verschiebbaren Fläche entspricht bzw. deren Verlängerung darstellt und der andere Abschnitt 56 einen Winkel von vorzugsweise 90° dazu beschreibt, wobei die seitliche Erstreckung des Abschnitts 56 von der Fläche 54 aus gleich oder kleiner als die Tiefe der zuzuordnenden Ausnehmung der Sonotrode 20 ist. Ferner verläuft der Abschnitt 56 parallel zur Sonotrodenlängsachse.

Eine weitere Ausgestaltung der Ausnehmungen des Sonotrodenkopfes ist der Fig. 1 zu entnehmen. Um dem Knotenpunkt der verbundenen Leiter eine besondere Stabilität zu geben, weist der parallel zur Randfläche bzw. zu der entlang dieser verschiebbaren Fläche des Ambosses verlaufende Schenkel (im Ausführungsbeispiel der Fig. 2 der Schenkel 50 der Ausnehmung 24) eine Strukturierung in Form von Riefen auf, die ihrerseits senkrecht zur Sonotrodenschwingungsrichtung verlaufen. Diese Riefen prägen sich dann an der Knotenstelle in den Leitern ein, wodurch die erwähnte Stabilisierung und erhöhte Festigkeit gegeben ist.

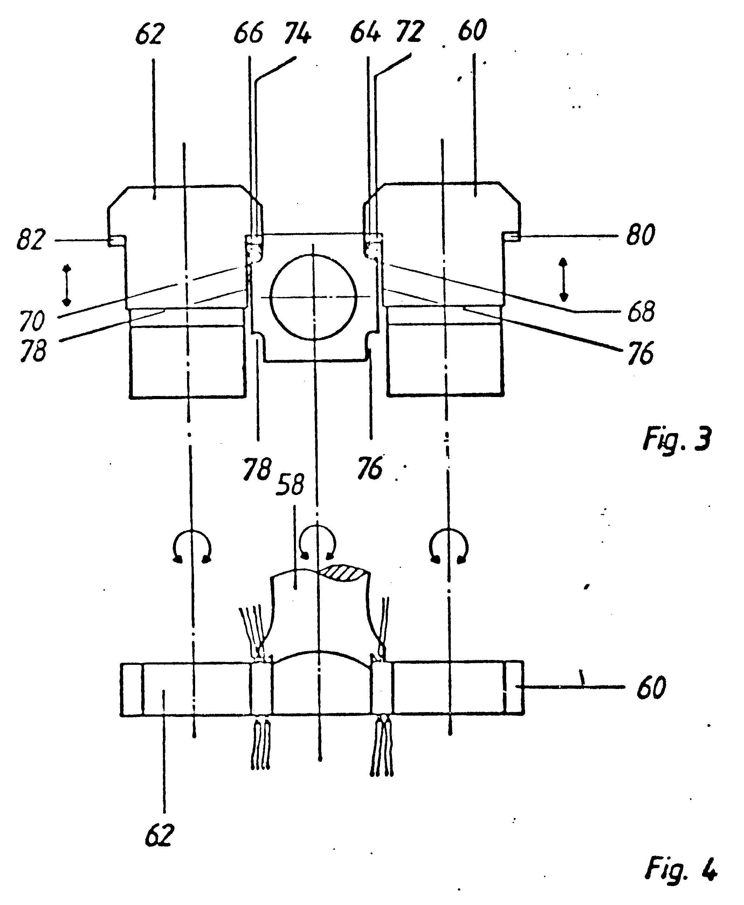

In der Fig. 3 ist eine weitere besonders hervorzuhebende Ausführungsform der erfindungsgemäßen Vorrichtung dargestellt, bei der eine Sonotrode 58 bzw. der Sonotrodenkopf von zwei Ambossen 60 und 62 umgeben ist, um bei einem Arbeitsgang gleich mehrere in verschiedene Ausnehmungen eingebrachte Leiter zu verschweißen. Hinsichtlich der Ausbildung der Ausnehmungen der Sonotrode 58 bzw. der Vorsprünge der Ambosse 60 und 62 wird auf die Erläuterungen im Zusammenhang mit den Fig. 1 und 2 verwiesen.

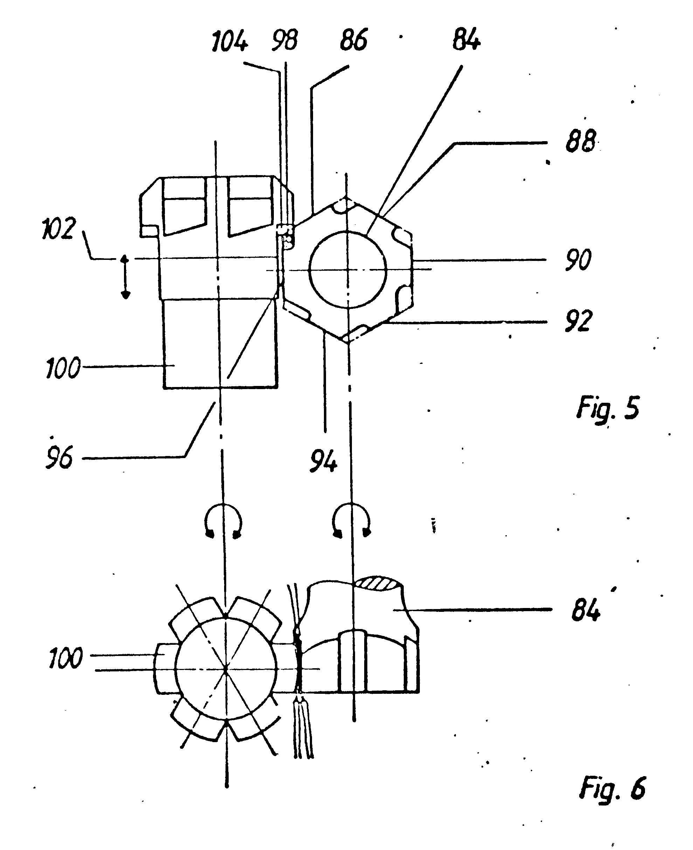

Die Ausführungsform der Fig. 3 und 4 bietet nun die Möglichkeit, in zwei Verdichtungsräume, nämlich in die Räume 64 und 66, die durch einander zugeordneten Ausnehmungen 68 bzw. 70 bzw. Vorsprünge 72 und 74 gebildet sind, Leiter einzulegen, um bei einem Arbeitsgang gleichzeitig zwei Knotenpunkte an unterschiedlichen Leitern zu bilden. Zu diesem Zweck werden die Ambosse 60 und 62 angehoben (nicht dargestellt), um in die Ausnehmungen 64 und 66 geführt durch die der Sonotrode zugewandten und entlang dieser verschiebbaren Flächen 76 bzw. 78 der Ambosse 60 und 62 die elektrische Leiter vorzugsweise in Form von Litzen einzubringen bzw. einzulegen. Sodann werden die Ambosse 60 und 62 synchron abgesenkt, um die erwähnten Verdichtungsräume 64 und 66 zu bilden. Anschließend wird die Sonotrode in Längsrichtung in Schwingung versetzt, um nach Zehntelsekunden den Schweißvorgang zu beenden.

Wegen der Zuordnung zweier Ambosse 60, 62 kann die Sonotrode 58 auch als Tandemsonotrode bezeichnet werden, bei der im Gegensatz zu dem Ausführungsbeispiel der Fig. 2 die Ausnehmungen 68 und 70 nicht gleichsinnig sondern entgegengesetzt — quasi symmetrisch zu einer Mittellinie — ausgebildet sind, da sie gleichzeitig mit jeweils einem Vorsprung (72 bzw. 74 der Ambosse 60 bzw. 62) in Wechselwirkung treten.

Neben den Vorsprüngen 68 und 70 weist die Tandemsonotrode 58 zwei weitere Vorsprünge 76 und 78 auf, die hinsichtlich der Abmessungen zu den zuerst genannten abweichen können, um unabhängig von Leiterstärken mit einer einzigen Sonotrode schweißen zu können. Entsprechend der unterschiedlichen Ausbildung der Ausnehmungen weisen die Ambosse 60 und 62 neben den Vorsprüngen 72 und 74 weitere Vorsprünge 80 und 82 auf, die gleichfalls in ihren Abmessungen ebenfalls abweichen können.

Um die unterschiedlichen Vorsprünge mit verschiedenen Ausnehmungen zusammenwirken zu lassen, sind gleichfalls die Ambosse 60 und 62 und die Sonotrode 58 jeweils um ihre Längsachsen drehbar angeordnet.

Sind nach den Ausführungsbeispielen der Fig. 1 bis 4 an den Sonotrodenumfangsflächen insgesamt 4 Ausnehmungen angeordnet, ist also in Draufsicht die Sonotrode im wesentlichen quadratförmig ausgebildet, so können - wie die Ausführungsformen der Fig. 5 und 6 zeigen -

auch mehr als vier Ausnehmungen vorgesehen werden, um noch eine größere Variabilität und Verwendungsweise zu ermöglichen, um also noch eine größere Bandbreite für zu verschweißenden Leitern unterschiedlicher Stärke zur Verfügung zu stellen.

So bilden die die Umfangsfläche der Sonotrode 84 bildenden Randflächen 86, 88, 90, 92, 94, 96 ein Sechseck in deren Ecken Ausnehmungen angeordnet sind. Eine von diesen sei beispielsweise mit dem Bezugzeichen 98 versehen. Im Ausführungsbeispiel ist nun jeder Ausnehmung ein spezieller Vorsprung eines Ambosses 100 zugeordnet, so daß dieser insgesamt sechs Vorsprünge aufweist, die jeweils von einer Fläche ausgehen, die entlang einer der Randflächen 86 bis 96 der Sonotrode 84 senkrecht oder nahezu senkrecht zur Längsachse der Sonotrode verschiebbar sind. Im Ausführungsbeispiel ist der Randfläche 96 der Sonotrode 84 die Fläche 102 zugeordnet, die in den Vorsprung 104 übergeht, der der Ausnehmung 98 angepaßt ist, um einen gewünschten Verdichtungsraum zu bilden, in den Leiterenden eingebracht sind bzw. anschließend verschweißt werden. Da der Sonotrode 84 nur ein Amboß 100 zugeordnet ist, sind die Ausnehmungen erneut gleichsinnig ausgebildet.

Sollten einer Sonotrode mit mehr als vier Ausnehmungen insgesamt 2 Ambosse zugeordnet werden, müßte die Zahl der Ausnehmungen einem Vielfachen vor Vier entsprechen, wobei dann zwei aneinandergrenzende Ausnehmungen einander entgegengesetzt ausgebildet sein müßten, also in etwa in bezug auf die zwischen ihnen gebildeten Mittellinien eine gewisse Symmetrie aufweisen.

Die Sonotrode des Ausführungsbeispiel der F i g. 5 und 6 kann auch aufgrund der Vielzahl der an der Umfangsfläche vorhandenen Ausnehmungen und des Drehens um die Längsachse als Revolversonotrode bezeichnet werden. Entsprechend kann der Amboß 100 Revolveramboß genannt werden.

## Patentansprüche

1. Vorrichtung zum Verbinden elektrischer Leiter (44) vorzugsweise in Form von Litzen umfassend eine Schall- bzw. Ultraschallschwingungen erzeugende Sonotrode (10, 12, 20, 28, 84) sowie zumindest eine als Amboß dienende Gegenelektrode (18, 60, 62, 100), dadurch gekennzeichnet, daß die Sonotrode (10, 12, 20, 28, 84) an der Umfangsfläche zumindest eine zu verbindenden Leitern (44) angepaßte Ausnehmung (14, 16, 22, 24, 26, 28, 68, 70, 76, 78, 98) aufweist, die von einer Sonotrodenrandfläche (30, 32, 34, 36, 86, 88, 90, 92, 96, 98) ausgeht, entlang der eine einen der Ausnehmung angepaßten Vorsprung (42, 48, 72, 74, 104) aufweisende Fläche (38, 40, 76, 78, 102) des Ambosses (18, 60, 62, 100) verschiebbar ist, und daß in der die Leiter verbindenden Stellung von Sonotrode und Amboß die Ausnehmung und der zugeordnete Vorsprung einen parallel oder nahezu parallel zur Sonotrodenschwingungsachse verlaufenden an seinen Stirnseiten zum Durchführen der Leiter geöffneten einen Verdichtungsraum (46, 64, 66) darstellenden Hohlraum bildet.

2. Vorrichtung nach Anspruch 1, dadurch gekennzeichnet, daß die Sonotrode (10, 12, 20, 58, 84) ein Vieleck bildende eben verlaufende die Umfangsfläche darstellende Randflächen (30, 32, 34, 36, 86, 88, 90, 92, 96, 98) umfaßt, in deren Schnittpunkten Ausnehmungen (14, 16, 22, 24, 26, 28, 68, 70, 76, 98) vorzugsweise unterschiedlicher Abmessungen angeordnet sind.

3. Vorrichtung nach Anspruch 1 und/oder Anspruch 2, dadurch gekennzeichnet, daß jeweils zwei Randflächen der Sonotrode (58) parallel zueinander verlaufen, in der jeweils ein Amboß (60, 62) mit Vorsprüngen (72, 74, 80, 82) vorzugsweise synchron zueinander bewegbar ist, die den zugeordneten Ausnehmungen (68, 70, 76, 78) angepaßt sind (Fig. 3, 4).

4. Vorrichtung nach zumindest Anspruch 1, dadurch gekennzeichnet, daß der Amboß (18, 60, 62, 100) mehrere vorzugsweise unterschiedliche Vorsprünge (42, 48, 72, 74, 80, 82, 104) aufweisende entlang von Sonotrodenrandflächen (30, 32, 34, 36, 86, 88, 90, 92, 94, 96) verschiebbare Flächen (38, 40, 76, 78, 102) aufweist.

5. Vorrichtung nach zumindest Anspruch 1, dadurch gekennzeichnet, daß der Amboß (18, 60, 62, 100) um seine Hauptachse drehbar ist, die parallel zu seiner Verschiebungsrichtung verläuft.

6. Vorrichtung nach Anspruch 1, dadurch gekennzeichnet, daß die an der Umfangsfläche der Sonotrode (10, 12, 20, 58, 84) angeordneten Ausnehmungen (14, 16, 22, 24, 26, 28, 68, 70, 76, 78, 98) durch zwei in Sonotrodenlängsachsenrichtung verlaufende Schenkel (50, 52) begrenzt sind, von denen der von der zugeordneten Randfläche (30) versetzt angeordnete (50) parallel zu dieser verläuft und der von der Randfläche (30) ausgehende zu dieser einen Winkel von 90° oder weniger beschreibt, wobei der Übergang zwischen den Schenkeln vorzugsweise konkav ausgebildet ist.

7. Vorrichtung nach Anspruch 6, dadurch gekennzeichnet, daß der parallel zur zugeordneten Randfläche (30) verlaufende Schenkel (50) parallel zur Verschiebungsrichtung des entlang der Randfläche zu bewegenden Ambosses (18) strukturiert ist, vorzugsweise in Form von sich abwechselnden Erhebungen und Vertiefungen wie zum Beispiel Riefen.

8. Vorrichtung nach Anspruch 1, dadurch gekennzeichnet, daß jeder Vorsprung (42, 48, 72, 74, 104) durch eine Stufe gebildet ist, deren einer erster Abschnitt (54) der entlang einer Randfläche der Sonotrode (20) verschiebbaren Fläche (54) entspricht oder von dieser ausgeht und der andere zweite Abschnitt (56) einen Winkel von vorzugsweise 90° dazu beschreibt, wobei die von dem ersten Abschnitt ausgehende seitliche Erstreckung des zweiten Abschnitts gleich oder kleiner als die Tiefe der zugeordneten Ausnehmung der Sonotrode ist.

9. Vorrichtung nach Anspruch 1 oder Anspruch 8, dadurch gekennzeichnet, daß die entlang der Randfläche (30, 32, 34, 36, 86, 88, 90, 92, 94, 96) der Sonotrode (10, 12, 20, 58, 84) verschiebbare Fläche (39, 40, 76, 78, 102) des Ambosses (18, 60, 62, 100) aus gehärtetem Material besteht.

10. Vorrichtung nach zumindest Anspruch 1, dadurch gekennzeichnet, daß die Bewegungsrichtung des bzw. der Ambosse (18, 60, 62, 100) zu der Schwingungsrichtung der Sonotrode (12, 20, 58, 84) einen Winkel von 90° ± 20° beschreibt.

## Claims

1. An apparatus for joining at least two electric conductors (44), preferably strands or the like, comprising a sonotrode (10, 12, 20, 28, 84) generating sound vibrations or, resp. ultrasonic oscillations, as well as at least one counterelectrode serving as an anvil (18, 60, 62, 100), characterized thereby that the sonotrode (10, 12, 20, 28, 84) on its circumferential surface has at least one recess (14, 16, 22, 24, 26, 28, 68, 70, 76, 78, 98) being adapted to conductors (44) to be joined, said recess starting from a lateral face of the sonotrode (30, 32, 34, 36, 86, 88, 90, 92, 96, 98), along which can be moved an area (38, 40, 76, 78, 102) of the anvil (18, 60, 62, 100) having a projection (42, 48, 72, 74, 104) adapted to the recess; and that in the position of sonotrode and anvil joining the conductors, the recess and the coordinated projection are defining a cavity representing a compression chamber (46, 64, 66), running parallel or almost parallel to the oscillation axis of the sonotrode and being open on its front faces for inserting the conductors.

2. An apparatus according to claim 1, characterized thereby that the sonotrode (10, 12, 20, 58, 84) comprises lateral faces (30, 32, 34, 36, 86, 88, 90, 92, 96, 98) defining a polygon, running evenly and representing the circumferential surface, in the intersecting points of which there are arranged recesses (14, 16, 22, 24, 26, 28, 68, 70, 76, 98) of preferably different dimensions.

3. Apparatus according to claim 1 and/or claim 2, characterized thereby that each time two lateral faces of the sonotrode (58) are running parallel to each other, in which one anvil each (60, 62) with projections (72, 74, 80, 82) can be moved preferably synchronously to each other, said projections being adapted to the coordinated recesses (68, 70, 76, 78) (Fig. 3, 4).

4. Apparatus at least according to claim 1, characterized thereby that the anvil (18, 60, 62, 100) has areas (38, 40, 76, 78, 102) movable along lateral faces of sonotrodes (30, 32, 34, 36, 86, 88, 90, 92, 94, 96), said areas having several preferably different projections (42, 48, 72, 74, 80, 82, 104).

5. Apparatus at least according to claim 1, characterized thereby that the anvil (18, 60, 62, 100) can turn on its main axis, which is running parallel to its moving direction.

6. Apparatus according to claim 1, characterized thereby that the recesses (14, 16, 22, 24, 26, 28, 68, 70, 76, 78, 98) arranged on the circumferential surface of the sonotrode (10, 12, 20, 58, 84) are limited by two flanges (50, 52) extending in direction of the longitudinal axis of the sonotrode, of which the one being arranged in stagger (50) to the coordinated lateral face (30) is running parallel to that face, and that one starting from the lateral face (30) is describing an angle of 90° or less with respect to that face, where the passage between the flanges is preferably of concave configuration.

7. Apparatus according to claim 6, characterized thereby that the flange (50) running parallel to the coordinated lateral face (30), is structured parallel to the moving direction of the anvil (18) displaceable along the lateral face, preferably in the manner of alternating elevations and deepenings like e. g. chamfers.

8. Apparatus according to claim 1, characterized thereby that each projection (42, 48, 72, 74, 104) is formed by a step, of which a first section (54) is corresponding to an area (54) being movable along a lateral face of the sonotrode (20) or is extending therefrom, and the other second section (56) is describing an angle of preferably 90° thereto, where the lateral extension of the second section starting from the first section is equal to or smaller than the depth of the coordinated recess of the sonotrode.

9. Apparatus according to claim 1 or claim 8, characterized thereby that the area (39, 40, 76, 78, 102) of the anvil (18, 60, 62, 100) being movable along the lateral face (30, 32, 34, 36, 86, 88, 90, 92, 94, 96) of the sonotrode (10, 12, 20, 58, 84) is made of hardened material.

10. Apparatus at least according to claim 1, characterized thereby that the moving direction of the anvil or, resp. anvils (18, 60, 62, 100) relative to the oscillation direction of the sonotrode (12, 20, 58, 84) is describing an angle of 90° ± 20°.

## Revendications

1. Dispositif pour la jonction électrique de conducteurs (44), notamment en forme de torons, comprenant une électrode sonore (10, 12, 20, 25, 84) productrice de vibrations sonores et ultra-sonores, ainsi qu'au moins une contre-électrode (18, 60, 62, 100) servant d'enclume, dispositif caractérisé en ce que l'électrode sonore (10, 12, 20, 28, 84) présente sur sa surface périphérique au moins un évidement (14, 16, 22, 24, 26, 28, 68, 70, 76, 78, 92) adapté à des conducteurs de liaison (44), qui partent d'une surface de bord rond d'électrode sonore (30, 32, 34, 36, 86, 88, 90, 92, 96, 98) et est coulissant le long d'une surface (38, 40, 76, 78, 102) de l'enclume (18, 60, 62—100) pourvue d'un appendice (42—48, 72, 74, 104) adapté à l'évidement, de telle sorte que, dans la position de l'électrode sonore et de l'enveloppe reliant les conducteurs, l'évidement et l'appendice qui lui est affecté, forment un espace creux étanche (46, 64, 66) s'étendant parallélement à l'axe d'oscillation de l'électrode sonore et ouvert sur ses faces latérales pour le passage des conducteurs.

2. Dispositif suivant la revendication 1, caractérisé en ce que l'électrode sonore (10, 12, 20, 58, 84) comprend des surfaces de bord (30, 32, 34, 36, 86, 88, 90, 92, 96, 98) représentant un carré de forme plane constituant la surface du pourtour, dans les points de recoupement duquel sont disposés des évidements (14, 16, 22, 24, 26, 28, 68, 70, 76, 98) de dimensions de préférence différentes.

3. Dispositif suivant l'une des revendications 1 et 2, caractérisé en ce que chacune des deux surfaces de bord de l'électrode sonore (58) qui sont parallèles entre eux est déplaçable de préférence en synchronisme, dans une enclume (60, 62) pourvue d'appendices saillants (72, 74, 80, 82) qui sont adaptés à des évidements appropriés (68, 70, 76, 78).

4. Dispositif suivant au moins la revendication 1, caractérisé en ce que l'enclume (18, 60, 62, 100) présente plusieurs surfaces coulissantes (38, 40, 76, 78, 102) disposées lé long des surfaces de bord d'électrode sonore (30, 32, 34, 36, 86, 88, 90, 92, 94, 96) présentant plusieurs bossages saillants, de préférence différents (42, 48, 72, 74, 82, 104).

5. Dispositif suivant au moins la revendication 1, caractérisé en ce que l'enclume (18, 60, 62, 100) est montée pour pouvoir tourner sur son axe principal qui s'étend parallèlement à sa direction de déplacement.

6. Dispositif suivant la revendication 1, caractérisé en ce que les évidements (14, 16, 22, 24, 26, 28, 68, 70, 76, 78, 98) qui sont disposés sur la surface de pourtour de l'électrode sonore (10, 12, 20, 58, 84) sont délimités par deux branches (50, 52) qui s'étendent en direction longitudinale de l'électrode, dont l'une s'étend, décalée par rapport au bord d'électrode (30) parallélement à celui-ci, et l'autre tracé (24) partant du bord d'électrode (30) un angle d'au plus de 90 degrés, la transition entre les branches étant de préférence de forme concave.

7. Dispositif suivant la revendication 6, caractérisé en ce que la branche (50) parallèle à la surface de bord (30) est structurée parallèlement à la direction de coulissement de l'enclume (18) se déplaçant le long de la surface de bord, de préférence en forme de bossages et creux alternés tels que par exemple des cannelures.

8. Dispositif suivant la revendication 1, caractérisé en ce que chaque bossage saillant (42, 48, 72, 74, 104) est formé par un épaulement dont une première portion (54) correspond à une surface (54) coulissant le long d'une surface de bord de l'électrode sonore (20), ou part de celle-ci, et la seconde portion (56) forme un angle de par exemple 90 degrés avec elle, l'extension latérale de la seconde portion à partir de la première portion étant égale ou inférieure à la profondeur de l'évidement de l'électrode sonore qui lui est affecté.

9. Dispositif suivant l'une des revencications 1 et 8, caractérisé en ce que la surface (39, 40, 76, 78, 102) de l'enclume (18, 60, 62, 100) qui est coulissante le long de la surface de bord (30, 32, 34, 36, 86; 88, 90, 92, 94, 96) de l'électrode sonore (10, 12, 20, 58, 84) est constituée en matériau trempé.

10. Dispositif suivant au moins la revendication 1, caractérisé en ce que la direction de déplacement de l'enclume (18, 60, 62, 100) forme par rapport à la direction d'oscillation de l'électrode sonore (12, 20, 58, 84) un angle de $90° \pm 20°$.

Fig. 2

Fig. 1

Fig. 3

Fig. 4

Fig. 5

Fig. 6